# EUROPEAN PATENT SPECIFICATION

(11) **EP 0 886 093 B1**
(45) Date of publication and mention of the grant of the patent: **06.03.2002**
(21) Application number: 98304332.4
(22) Date of filing: 02.06.1998
(51) Int. Cl.: F16L 3/12, F16L 3/22, F16L 55/033

(54) **Pipe fastener and its method of manufacture**
Rohrbefestigungselement und seine Herstellungsprozesse
Clip pour tuyaux et ses méthodes de fabrication

(30) Priority: 10.06.1997 JP 15174597
(43) Date of publication of application: 23.12.1998
(73) Proprietor: EMHART INC., Newark, Delaware 19711 (US)
(72) Inventor: Denndou, Masashi, Toyohashi, Aichi (JP)
(74) Representative: Dlugosz, Anthony Charles

(56) References cited:
- EP-A- 0 230 553
- EP-A- 0 770 806
- DE-A- 4 213 231
- US-A- 5 170 984

## Description

The present invention relates to a fastener for holding pipe like members such as a fuel pipe and a brake pipe of an automobile, on a panel such as a vehicle body, and a method of manufacturing the fastener.

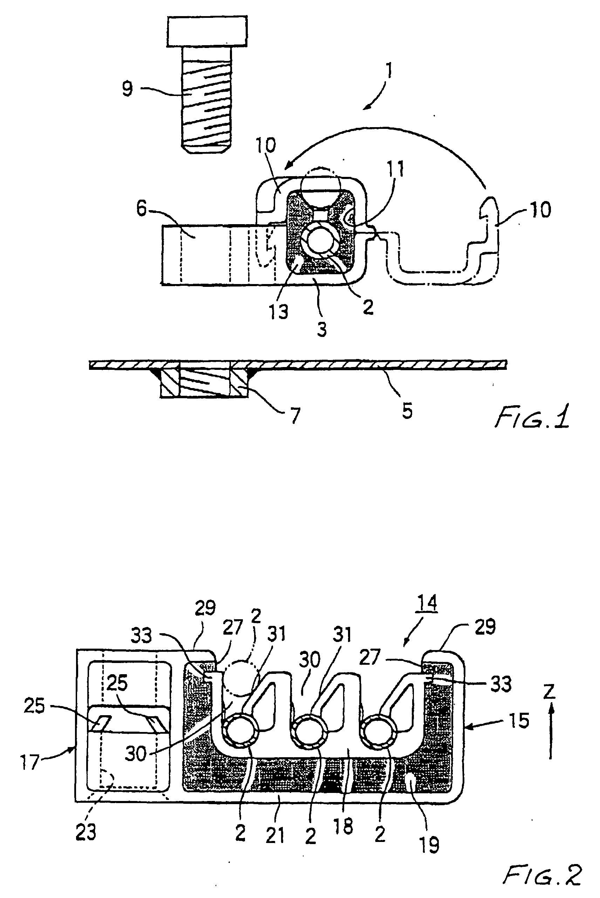

A certain number of fasteners made of synthetic resin have been developed for holding pipes like fuel and brake pipes of an automobile on a panel such as a vehicle body. For example, Japanese Published Utility Models Nos. 4-75289 and 5-733139 disclose such pipe fasteners. An example of such a conventional fastener is shown in Figure 1. The fastener 1 comprises a pipe holder 3 to hold a pipe 2 and a panel fixing portion 6 to be fixed to a panel 6. The panel fixing portion 6 is fixed to the panel 5 by means of a nut 7 and a bolt 9 which are fixed to the panel 5. The pipe holder 3 has a cover 10 with a pivotable hook for receiving and holding the pipe 2. On the outer surface of the pipe 2 received in a pipe receiver 11 of the pipe holder 3, a damping portion 13 made of a vibration absorbing material is provided. The damping portion 13 maintains quietness in the interior of the car by absorbing vibrations transmitted via a fuel pipe and a brake pipe lest they should be transferred to the panel to which the fastener is attached.

The above-described fastener with a damping portion is desirable in that it maintains the interior comfort of a car. However, there are still some problems to be solved. The vibration absorbing material of the damping portion is a resilient soft material, and it is unable to hold a pipe by itself and needs a pivotable cover made of a hard material to compress the damping portion to hold the pipe. This requires work to close the damping portion with a cover, which means the pipe has to be attached to the fastener manually, so that the pipe attachment operation cannot be automated. It is also a problem that the resilient soft material generally used for making the damping portion has high friction force, which reduces the pipe mounting force.

EP 0 770 806 discloses a holding element for fastening at least one tubular component on a carrier. EP 0 770 806 forms the closest piece of prior art to the present invention and comprises all the features disclosed in the pre-characterising part of claim 1.

US 5,170,984 discloses al alternative design of holding element for fastening a tubular component to a carrier, the construction being different to the present invention.

It is an object of the present invention to provide a pipe fastener which is capable of holding pipes without requiring a cover, attaching the pipes easily and ensuring a high pipe mounting force while retaining the vibration absorbing function.

It is a further object of the present invention to provide a method of manufacturing the above-stated pipe fastener.

The present invention provides a pipe fastener for use in fixing pipes to a panel, comprising a pipe holder to hold the pipes and a panel fixing portion to be fixed to the panel, wherein the pipe holder comprises a pipe engagement portion which receives the pipes inside thereof and engages with the pipes, a damping portion of a vibration absorbing material, and a holding portion connected to the panel fixing portion characterised in that the damping portion is disposed on the outer portion of the pipe engagement portion and the holding portion holds the outer portion of the damping portion; the pipe engagement portion, the damping portion and the holding portion being connected to each other as one piece and the pipe engagement portion (18) and holding portion being connected only through the damping portion.

As described above, the pipe holder comprises a pipe engagement portion inside it, the damping portion which is made of a vibration absorbing material and is disposed on the outer portion of the pipe engagement portion, and the holding portion provided on the outer portion of the damping portion, and the pipe engagement portion, the damping portion and the holding portion are connected as one piece. Therefore, the pipes are held simply when they are pressed into the pipe engagement portion and vibrations of the pipe engagement portion are absorbed by the damping portion without transmission to the holding portion and the panel fixing portion, to prevent the vibrations from being transmitted to the panel. Thus, the fastener can hold the pipes while retaining the vibration absorbing function without requiring a cover, facilitates attachment of the pipes and maintains a high pipe mounting force.

For the above fastener, it is possible to make the pipe engagement portion and the holding portion from hard resin and the damping portion from soft resin. The panel fixing portion can be provided with means which receive a stud bolt fixed to the panel and engage with it, or can be formed so as to be fixed to the panel by means of a bolt and a nut. It is also possible to form the above fastener with one panel fixing portion and two pipe holders provided on both sides of the panel fixing portion, to connect the holding portion of one of the pipe holders integrally with the holding portion of the other pipe holder and to connect the coupling portion of the holders with the panel fixing portion through a vibration absorbing member. This structure maintains quietness in the car interior because vibrations increased when a larger number of pipes are held by the pipe holders can be absorbed sufficiently by the damping portion and the vibration absorbing member.

The present invention also provides a method for manufacturing the above-mentioned fastener, which method comprises the steps of integrally moulding the panel fixing portion, the holding portion of the pipe holder and the pipe engagement portion as one piece by using the same hard resin while forming thin portions to make a space in which the damping portion is to be provided, and moulding the damping portion by injecting a vibration absorbing material into the space between the pipe engagement portion and the holding portion of the member moulded as one piece. The above-described pipe fastener can be moulded by this method.

In addition to the above manufacturing method, the invention comprises a further method of manufacturing the fastener, which method comprises the steps of moulding the panel fixing portion and the holding portion of the pipe holder as one piece using the same hard resin, holding the pipe holder moulded from the same hard resin to the holding portion of the member moulded as one piece, with a space kept between them for providing the damping portion, and moulding the damping portion by injecting a vibration absorbing material into the space between this pipe engagement portion and the holding portion. A further alternative method of manufacturing the fastener comprises the steps of preparing the panel fixing portion and the holding portion of the pipe holder moulded as one piece by using the same hard material, the pipe engagement portion moulded by using the hard resin, and the damping portion made of a soft resin vibration absorbing material, and positioning the damping portion between the pipe engagement portion and the holding portion and connecting the pipe engagement portion and the holding portion together as one piece by means of the damping portion.

Alternative embodiments of a pipe fastener will now be described, with reference to the accompanying drawings, in which:
Figure 1 is a front view of a conventional pipe fastener before it is attached to a panel;
Figure 2 is a front view of a pipe fastener of a first embodiment of the present invention;
Figure 3 is a front view of the pipe fastener of the first embodiment of the present invention before it is attached to a panel;
Figures 4 showing the fastener of Figure 2 according to the present invention in the middle of moulding operation; (A) is a plan view, (B) is a front view and (C) is a sectional view taken along the line C-C of (B);
Figure 5 is a diagram showing manufacturing steps of the fastener of Figure 2 according to the present invention; Figures 6 being plan views of moulding processes by using metal moulds in the step (b) of Figure 5, (A) shows the state before moving a metal mould and (B) shows the state after the move of the metal mould;
Figure 7 is a diagram showing manufacturing steps of the fastener of Figure 2 according to the present invention which are different from the ones shown in Figure 5;
Figure 8 is a diagram showing manufacturing steps of the fastener of Figure 2 according to the present invention which are different from the ones shown in Figures 5 and 7;
Figure 9 is a front view of a variation of the fastener of Figure 2;
   Figure 10 is a front view of another variation of the fastener of Figure 2;
Figure 11 is a front view of still another variation of the fastener of Figure 2;
Figure 12 is a front view of another embodiment fastener of the present invention;
Figure 13 is a sectional view of the vibration absorbing member of Figure 12 taken along the line A-A of Figure 12;
Figure 14 is a front view of the fastener of Figure 12 before attached to a panel, showing a different way of using it and
Figure 15 is a front view of a variation of the fastener of Figure 12 before attached to a panel.

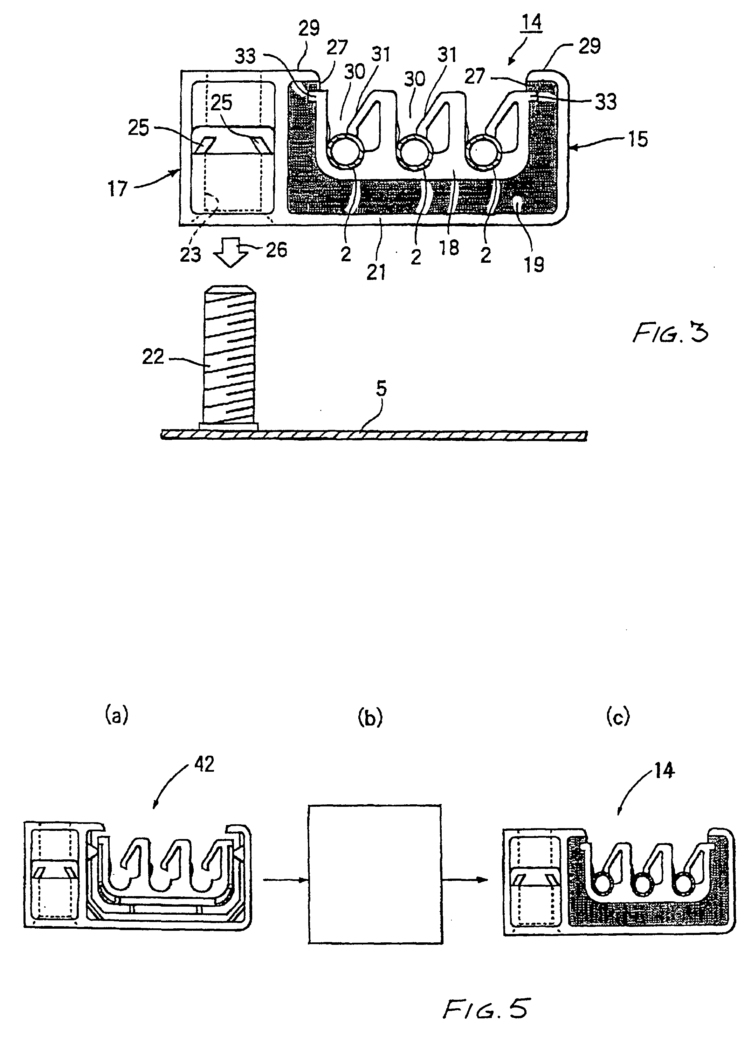

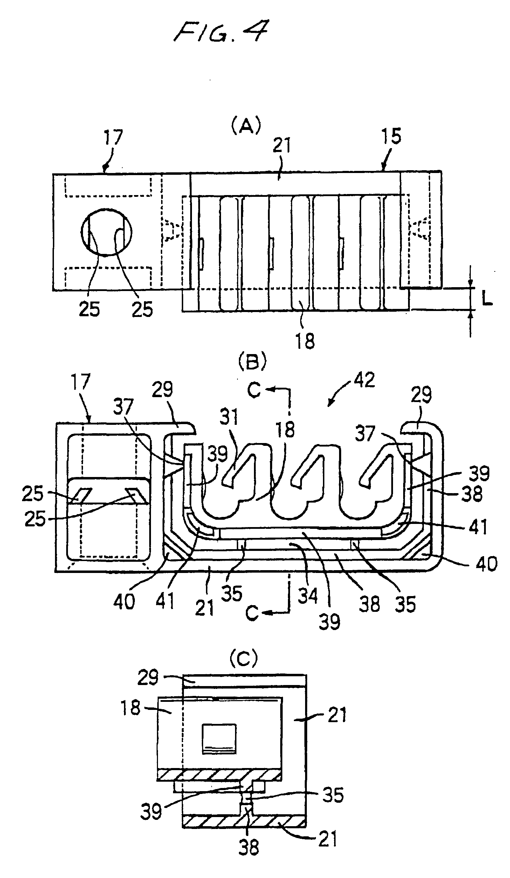

A pipe fastener 14 according to a first embodiment is shown in Figures 2 and 3. Figure 2 shows details of the fastener 14. Figure 3 shows the method for attaching the pipe fastener 14. In Figures 2 and 3, the pipe fastener 14 is made up of a pipe holder 15 to hold a plurality of pipes 2, and a panel fixing portion 17 to be fixed to the panel 5. The panel holder 15 comprises a panel engagement portion 18 to receive the pipes 2 inside it and engage with them, a damping portion 19 which is disposed on the outer portion of the pipe engagement portion 18 and is made of a vibration absorbing material, and a holding portion 21 which holds the damping portion 19 from outside and is connected to the panel fixing portion 17. In the pipe holder 15, the pipe engagement portion 18, the damping portion 19, and the holding portion 21 are connected as one piece. The pipe engagement portion 18 and the holding portion 21 are made of hard resin while the damping portion 19 is made of a soft resin which is highly vibration absorptive. The pipe engagement portion 18 and the holder 21 are connected only through the damping portion 19.

As shown in Figure 3, the panel fixing portion 17 of the fastener 14 is so configured that it receives and holds a stud bolt 22 fixed to the panel 5 by welding or some other method. For this purpose, a hollow portion 23 to be penetrated by the stud bolt 22 is formed in the centre and the hollow portion 23 is formed with a pair of bolt engagement pawls 25,25 to engage with the threads of the stud bolt 22. Accordingly, when pressed in the direction indicated by arrow 26 of Figure 3, the panel fixing portion 17 engages directly with the stud bolt 22 and is fixed to it. The panel fixing portion 17 is connected to the holding portion 21 of the pipe fixing portion 15 by integrated moulding. The holding portion 21 holds the damping portion 19 and forms the bottom of the pipe fixing portion 15 and one of the outer walls of the pipe fixing portion 16. Making use of the upright wall of the panel fixing portion 17, the holding portion encloses the bottom and both sides of the damping portion 19. In its upper portion, the holding portion 21 has engagement edges 29,29 which engage with top edges 27,27 on both sides of the damping portion 19. This prevents the damping portion 19 from slipping from the holding portion 21 in the direction Z in Figure 2 and the damping portion 19 is held reliably by the holding portion 21. The damping portion 19 is formed in such a configuration that it holds the pipe engagement portion 18 inside the holding portion 21, and is made of a material that absorbs vibrations transmitted to the pipes 2, resilient soft resin materials being typical of such a material.

The pipe engagement portion 18 held by the holding portion 21 has a plurality of substantially U-shaped, pipe-receiving grooves 30 opening upwardly, and resilient pipe retaining portions 31 extending diagonally from an upper end toward the bottom of each groove. As shown by the pipe 2 on the left in Figure 2, when the pipe is simply pressed down from the position indicated by a dotted line, the pipe 2 is seated in the groove 30 and held so as not to escape. The grooves 30 and the engagement portions 31 are formed to have shapes and sizes matching the diameters and sizes of pipes to be received so that pipes with different diameters can be received. On the upper ends of both sides of the pipe engagement portion 18, a pair of damping portion engagement portions 33,33, extending outwardly to bite into the damping portion 19 are formed. They prevent the pipe engagement portion 18 from coming off in the direction Z of Figure 2 and the damping portion 19 is reliably held. Thus, the pipes 2 held by the pipe engagement portion 18 are firmly held by the pipe fixing portion 15.

As described above, the pipes 2 are easily attached to the fastener 14 by simply pressing them into the grooves 30 of the pipe engagement portion 18 made of hard resin, without requiring the cover 10 of the conventional fastener 1 of Figure 1, nor the step of pivotting the cover. Accordingly, for piping in predetermined positions of the vehicle body, it is possible to carry out pipe attachment operation by previously attached fasteners 14 to predetermined positions for a plurality of pipes and pressing them onto stud bolts on the vehicle body panel, that is, the piping operation can be automated. Vibrations transmitted from the pipes 2 to the pipe engagement portion 18 are absorbed in the damping portion 19 and do not reach the holding portion 21, not the panel fixing portion 17. Therefore, vibrations of the pipes are never transmitted from the panel fixing portion 17 engaging with the stud bolt 22 to the panel 5 and comfort is maintained in the car interior.

The manufacture of the fastener 14 is described in the following, with reference to Figures 4 to 8. Initially, as shown in Figures 4(A), (B) and (C), the panel fixing portion 17, the holding portion 21 and the pipe engagement portion 18 are moulded as one piece from the same hard resin material by the use of metal moulds. In this moulding as one piece, the panel fixing portion 17 and the holding portion 21 are moulded straight but the pipe engagement portion 18 is shifted parallel to the direction in which the pipes 2 extend, by a length L in Figure 4(A) relative to the holding portion 21 and the panel fixing portion 17. In this integral moulding process, the pipe engagement portion 18 and the holding portion 21 are connected to each other through thin portions 35,35 and 37,37 so as to define a space 34 in which the damping portion 19 is located. These thin portions 35 and 37 connect a reinforcement rib 38 formed in a centre portion of the inner wall surfaces of the holding portion 21 and a reinforcement rib 39 formed on the outer wall surfaces of the pipe engagement portion 18 corresponding to the reinforcement rib 38. The thin portions 35 and 37 are broken when the pipe engagement portion 18 is moved so as to be in alignment with the panel fixing portion 17 and the holding portion 21. At two corners of the reinforcement rib 38 of the holding portion 21, tunnels 40 are provided in order for soft resin, which forms the damping portion 19, to be held by the holding portion 21. Similarly, tunnels 41 are provided at two corners of the reinforcement rib 39 in order for soft resin, which forms the damping portion 19, to be held by the pipe engagement portion 18.

In Figure 5, a moulded unit 42 shown in Figure 4 is moulded by the use of a primary metal mould in step (a). In step (b), by the use of a secondary metal mould, soft resin is injected to mould the damping portion 19 while aligning the pipe engagement portion 18 shifted by the length L with the holding portion 21 and the panel fixing portion 17. As a result, the pipe fastener 14 shown in step (c) is manufactured.

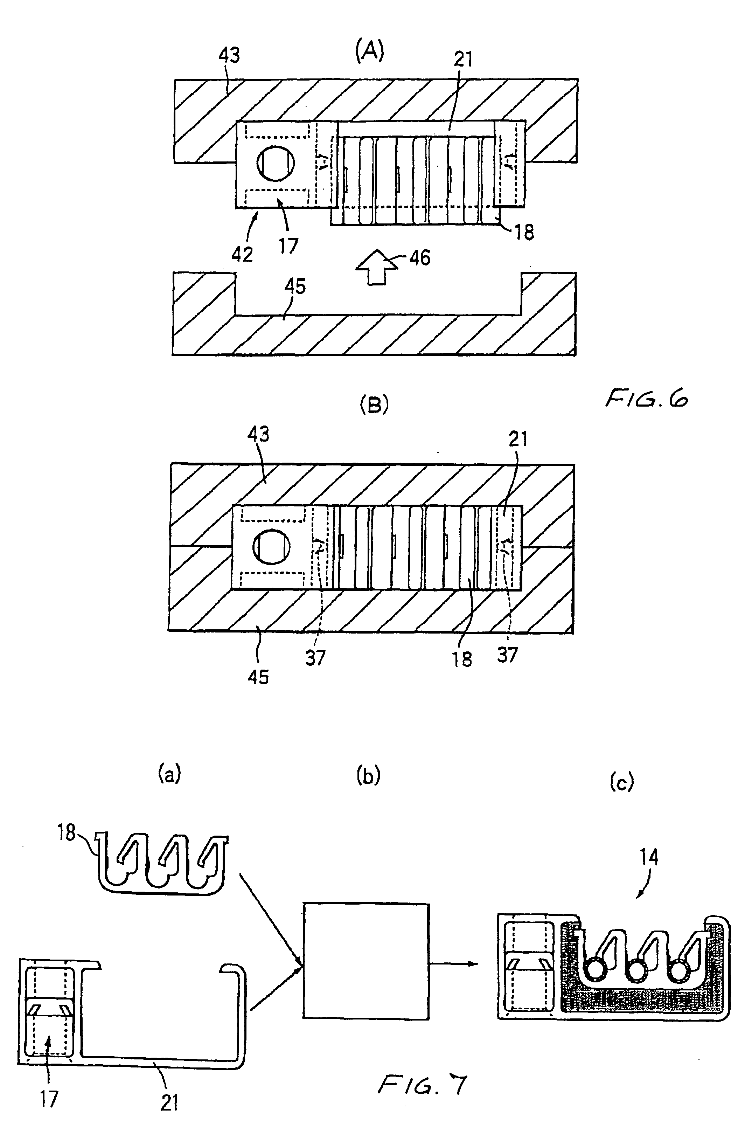

Moulding of the damping portion 19 in step (b) shown in Figure 6 is explained with reference to Figures 6(A) and (B). First, as illustrated, in Figure 6(A), the moulded unit 42 is set in a mould 43. At the same time, the panel fixing portion 17 and the holding portion 21 are set inside the metal mould 43 but the pipe engagement portion 18 extends by the length L. Following the setting, the other mould 45 is moved in the direction indicated by an arrow 46 for mould tightening and at the same time, a soft resin material is injected to fill the space between the holding portion 21 and the pipe engagement portion 18. As shown in Figure 6(B), moving of the mould 45 breaks the thin portions 36 and 37 which have connected the pipe engagement portion 18 to the holding portion 21, and the pipe engagement portion 18 is aligned with the panel fixing portion 17 and the holding portion 21. During this process, the space 34 between the holding portion 21 and the pipe engagement portion 18 is filled with the soft resin material, which also fills the tunnels 40 of the reinforcement rib 38 of the holding portion 21 and the tunnels 41 of the reinforcement rib 39 of the pipe engagement portion 18 and the damping portion 19 is formed between the holding portion 21 and the pipe engagement portion 18 and is fixed to both of them. Thus, the fastener 14 is completed.

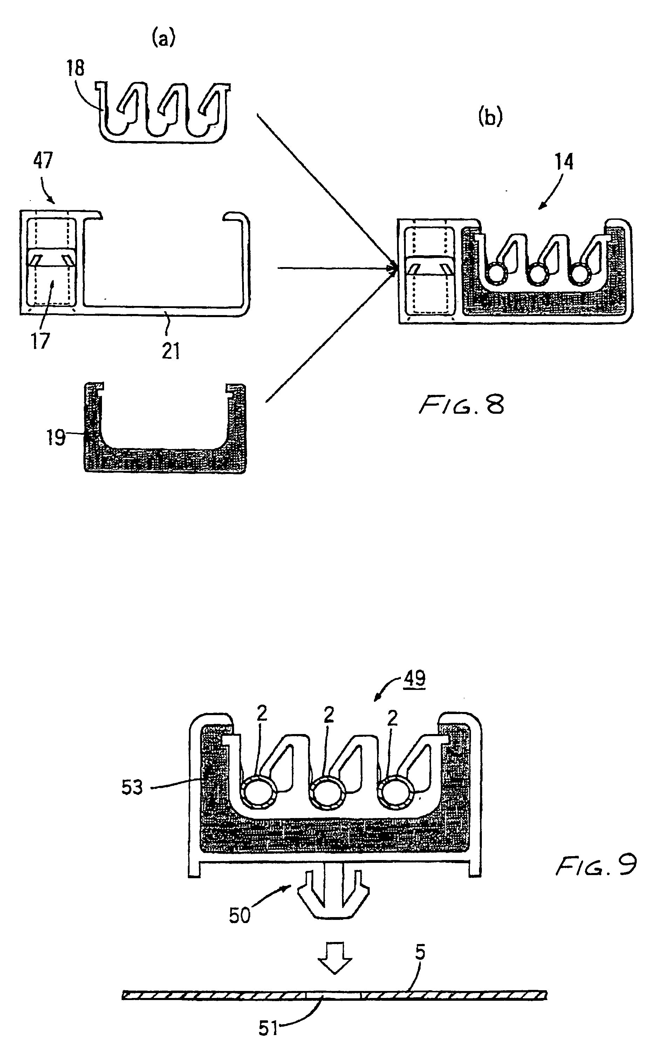

There is an alternative method of manufacture of fastener 14. In step (a) shown in Figure 7, the panel fixing portion 17 and the holding portion 21 are moulded as one piece using the same hard resin, and the pipe engagement portion 18 is also moulded using the same hard resin. In step (b), the pipe engagement portion 18 is held to the holding portion 21, with a space kept between them for the damping portion to be provided, and soft resin is injected into the space for the damping portion using a secondary metal mould. This injection moulding completes the fastener 14 as a finished product as shown in step (c).

Figure 8 shows another manufacturing method. In this method, a moulded unit 47 comprising the panel fixing portion 17 and the holding portion 21 which have been moulded as one piece from hard resin, the pipe engagement portion 18 moulded from the same hard resin, and the damping portion 19 made of soft resin as a vibration absorbing material are prepared as shown in step (a). Then, as illustrated in step (b), the fastener 14 is formed by connecting the moulded unit 47, the pipe engagement portion 18 and the damping portion 19 together as one piece by means of, for example, gluing.

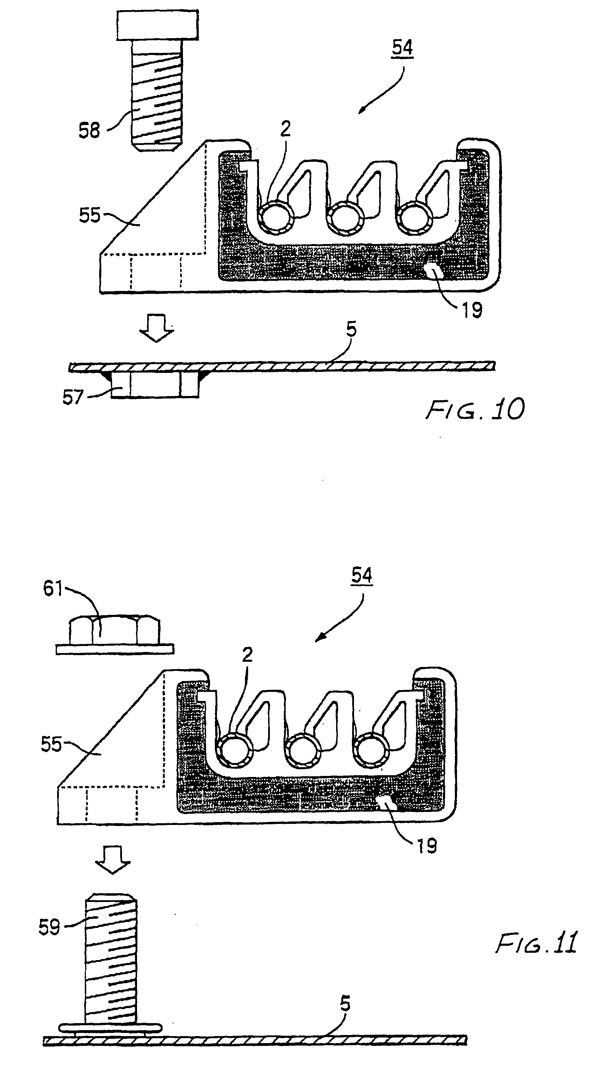

Figure 9 shows a second embodiment of a pipe fastener. A fastener 49 has a panel fixing portion 50 formed as an anchor leg integrally moulded on the bottom of a holding portion 51. When inserted in a mounting hole 51 in the panel 5, the panel fixing portion 50 is fixed to the panel 5, thereby securing the pipes 2 to the panel 5. In the fastener 49, also, a damping portion 53 absorbs vibrations and the pipes 2 can be held without requiring a cover.

Figures 10 and 11 show another embodiment of a pipe fastener. In Figure 10, a panel fixing portion 55 of a fastener 54 is fixed to the panel 5 by means of a nut 57 and bolt 58 attached to the panel 5. In Figure 11 the panel fixing portion 55 of the fastener 54 is fixed to the panel 5 by means of a bolt 59 provided to stand from the panel 5 and a nut 61. The damping portion 19 of this fastener 54 also absorbs vibrations and the fastener is able to hold the pipes 2 without requiring a cover.

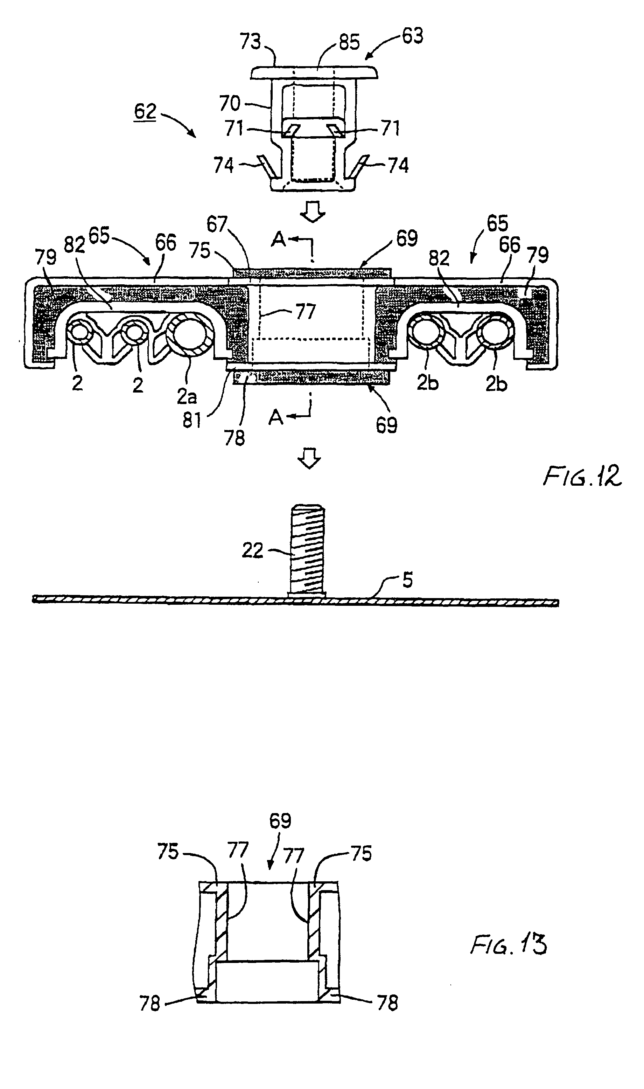

Figures 12 and 13 show another pipe fastener 62. The fastener 62 comprises a bolt engagement clip 63 which serves as a panel fixing portion, and two pipe holders 65 positioned on both sides of the bolt engagement clip 63. A holding portion 66 of one of the two pipe holders 65 is integrally connected with the holding portion 66 of the other pipe holder via a coupling portion 57. The bolt engagement clip 63 which is a panel fixing portion is moulded separately from the pipe holders 65 but they are connected to each other by assembly. When assembled, the coupling portion 67 and the bolt engagement clip 63 are connected to each other via a tubular vibration absorbing member 69.

In Figures 12 and 13, the bolt engagement clip 63 has a hollow shank 70 to receive the stud bolt 22 fixed to the panel 5. The clip 63 further has engagement pawls 71 formed inside the shank 70, a head 73 formed on an end of the shank 70, and pipe holder engagement pawls 74 formed on the other end of the shank 70. The vibration absorbing member 69 comprises a tubular member through which the shank 70 of the bolt engagement clip 63 passes. The tubular vibration absorbing member 69 is indicated by broken lines in Figure 12, and is shown also in Figure 13 which is a sectional view taken along the line A-A of Figure 12. The vibration absorbing member 69 comprises a first flange 75 to cover the outer portion of the coupling portion 67 connecting the two holding portions 66 together, a tubular body 77 to be penetrated by the clip shank 70, and a second flange 78 on the opposite side to the first flange 75, and is made of the same soft resin vibration absorbing material as that of damping portions 79. The second flange 78 covers the outer portion of a plate portion 81 below the coupling portion 67. The bolt engagement clip 63 is assembled to the vibration absorbing member 69. By this arrangement, vibrations increased when a large number of pipes 2,2a,2b etc are held in pipe engagement portions 82 of the pipe holders 66, can be absorbed sufficiently by the vibration absorbing member 69 as well as the damping portions 79 and comfort can be maintained in the car interior.

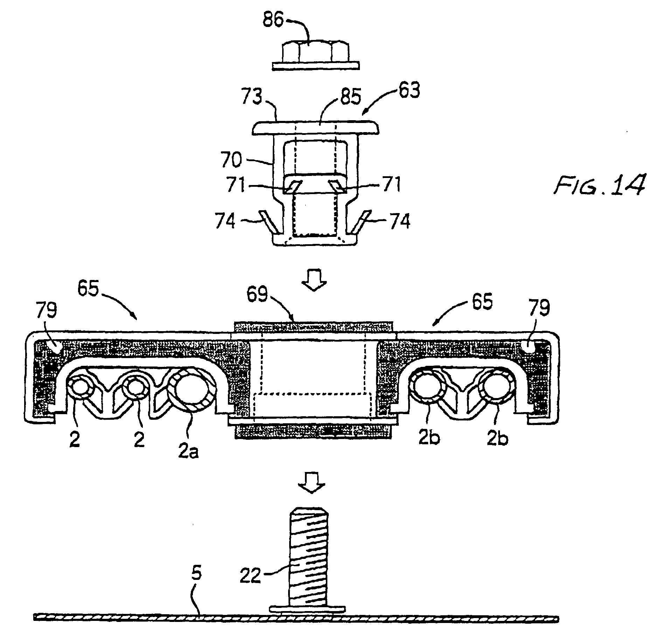

Figure 14 shows a different way of using the bolt engagement clip 63 with the fastener of Figures 12 and 13. The head 73 of the clip 63 is formed with a hole 85 through which the stud bolt 22 extends. A nut 86 is screwed round the stud bolt 22 projecting from the head 73 so as to fix the clip 63 to the stud bolt 22 even more firmly. In this case, the engagement pawls 71 of the clip 63 function for temporary fixing to the stud bolt 22 and the nut 85 fixes the clip 83 permanently. Thus, the clip 63 is also usable for temporary fixing.

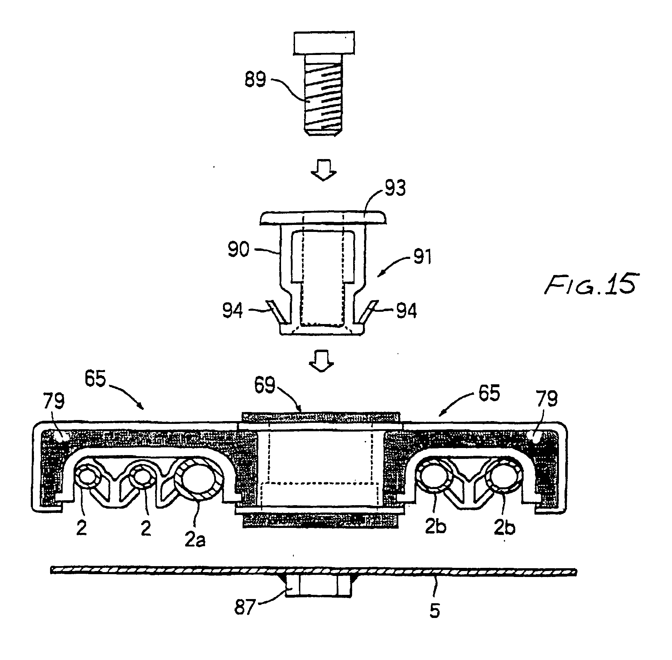

Figure 15 shows a variation of the bolt engagement clip 63, i.e., the panel fixing portion of the fastener of Figures 12 and 13. In Figure 15 the panel fixing portion comprises a spacer clip 91 having a hollow shank 90 for receiving a bolt 89 to be screwed into a nut 87 fixed to the panel 5. The spacer clip 91 has a head 93 formed on an end of the shank 90, and pipe holder engagement pawls 94 formed on the other end of the shank 90. Explanation of the vibration absorbing member 69 is omitted as it is the same as the one shown in Figures 12 and 13. Since the spacer clip 91 is fixed to the panel 5 reliably by the bolt 89 and the nut 87, it fulfils the function of fixing the pipe holders 65 to the panel 5. In addition, it fulfils the function of keeping the panel 5 separated from the pipes 2,2a etc by a certain space, by preventing the pipe holders 65 from being pressed excessively onto the surface of the panel 5. In this embodiment also, increased vibrations of the pipes 2,2a etc in the pipe holders 65 are sufficiently absorbed by the vibration absorbing member 69 as well as the damping portions 79 and comfort is maintained in the car interior.

## Claims

1. A pipe fastener (14) for use in fixing pipes (2) to a panel (5), comprising a pipe holder (15) to hold pipes (2) and a panel fixing portion (17) to be fixed to the panel (5); wherein the pipe holder (15) comprises a pipe engagement portion (18) which receives the pipes (2) inside thereof to engage with the pipes (2), a damping portion (19) of a vibration absorbing material, and a holding portion (21) connected to the panel fixing portion (17) **characterised in that** the damping portion (19) is disposed on the outer portion of the pipe engagement portion (18) and the holding portion (21) holds the outer portion of the damping portion (19); the pipe engagement portion (18), the damping portion (19) and the holding portion (21) being connected to each other as one piece and the pipe engagement portion (18) and the holding portion (21) being connected only through the damping portion (19).

2. A fastener according to claim 1 **characterised in that** the holding portion (21) has engagement edges (29) which engage with the top edges (27) on both sides of the damping portion (19).

3. A fastener according to either of claims 1 or 2 **characterised in that** a pair of damping portion engagement portions (33) located on the upper ends of both sides of the pipe engagement portion (18) extend outwardly to bite into the damping portion.

4. A fastener (14) according to any one of the previous claims **characterised in that** the pipe engagement portion (18) and the holding portion (21) are made of hard resin and the damping portion (19) is made of soft resin.

5. A fastener (14) according to any one of the previous claims **characterised in that** the panel fixing portion (17) has means to receive a stud bolt (22) fixed to the panel (5) to engage with it.

6. A fastener (54) according to any one of claims 1 to 4 **characterised in that** the panel fixing portion (55) is formed so as to be fixed to the panel (5) by means of a bolt (58) and a nut (57).

7. A fastener (62) according to any one of claims 1 to 4 **characterised in that** the pipe fastener (62) comprises one panel fixing portion (63) and two pipe holders (65) provided on opposite sides of the panel fixing portion (63) and the holding portions (66) of one of the pipe holders (65) is connected integrally with the holding portion (65) of the other pipe holder (65), the coupling portion (57) of the holding portions (66) being connected with the panel fixing portion (63) through a vibration absorbing member (69).

8. A fastener (62) according to claim 7 **characterised in that** the panel fixing portion (63) comprises a bolt engagement clip (63) having a hollow shank (70) to receive a bolt (22) fixed to the panel (5), the clip (63) having bolt engagement pawls (71) formed inside the shank (70), a head (73) formed at an end of the shank (70) and pipe holder engagement pawls (74) formed on the other end of the shank (70), and the vibration absorbing member (69) comprises a tubular member to be penetrated by the shank (70) of the bolt engagement clip (63) and is located between the clip (63) and the pipe holders (65).

9. A fastener (62) according to claim 8 **characterised in that** the head (73) is formed with a hole (85) through which the bolt (22) extends, and the bolt (22) extending from the head (73) is capable of being screwed into a nut (86).

10. A fastener according to claim 7 **characterised in that** the panel fixing portion comprises a spacer clip (91) having a hollow shank (90) which receives the bolt (89) to be screwed into the nut (87) fixed to the panel (5), the clip (91) having a head (93) formed at an end of the shank (90) and pipe holder engagement pawls (94) formed at the other end of the shank (90), and the vibration absorbing member (69) comprises a tubular member to be penetrated by the shank (90) of the spacer clip (91) and is located between the clip (91) and the pipe holders (65).

11. A method of manufacturing a fastener (14) according to any of claims 1 to 10 **characterised in that** the method comprises the steps of integrally moulding the panel fixing portion (17), the holding portion (21) of the pipe holder (15) and the pipe engagement portion (18) as one piece by using the same hard resin while forming thin portions between the pipe engagement portion (18) and the holding portion (21) so as to make a space in which the damping portion (19) is to be provided, and moulding the damping portion (19) by injecting a vibration absorbing material into the space between the pipe engagement portion (18) and the holding portion (21) of the member moulded as one piece.

12. A method according to claim 11 **characterised in that** during the step of moulding as one piece, the pipe engagement portion (18) is positioned in parallel with the direction of the pipes (2) as shifted from the holding portion (21) and the panel fixing portion (17), and in moulding the damping portion (19), injection moulding is carried out while breaking the thin portions by moving a metal mould, and moving the pipe engagement portion (18).

13. A method of manufacturing a fastener (14) according to any of claims 1 to 10 **characterised in that** the method comprises the steps of moulding the panel fixing portion (17) and the holding portion (21) of the pipe holder (15) as one piece by using the same hard resin, holding the pipe engagement portion (18) moulded from the same hard resin as the holding portion (21) of the member moulded as one piece, with a space kept for the damping portion (19) to be provided, and moulding the damping portion (19) by injecting a vibration absorbing material into the space between the pipe engagement portion (18) and the holding portion (21).

14. A method of manufacturing a fastener according to any of claims 1 to 10 **characterised in that** the method comprises preparing the panel fixing portion (17) and the holding portion (21) of the pipe holder (15) moulded as one piece by using the same hard resin, the pipe engagement portion (18) moulded by using the hard resin and the damping portion (19) made of a soft resin vibration absorbing material, positioning the damping portion (19) between the pipe engagement portion (18) and the holding portion (21), and connecting the pipe engagement portion (18) and the holding portion (21) together as one piece by means of the damping portion (19).

## Patentansprüche

1. Rohrbefestigungselement (14) zum Einsatz bei der Befestigung von Rohren(2) an eine Platte(5), umfassend eine Rohrhalterung(15) zum Halten von Rohren (2) und einen Plattenbefestigungsabschnitt (17), der an die Platte (5) befestigt wird; wobei die Rohrhalterung(15) einen Rohraufnahmeabschnitt(18), der die Rohre (2) im Inneren davon aufnimmt, um mit den Rohren (2) in Eingriff zu kommen, einen Dämpfungsabschnitt (19) aus einem schwingungsdämpfenden Material und einen mit dem Plattenbefestigungsabschnitt (17) verbundenen Halteabschnitt (21) umfasst, **dadurch gekennzeichnet, dass** der Dämpfungsabschnitt (19) auf dem äußeren Abschnitt des Rohraufnahmeabschnittes (18) angeordnet ist und der Halteabschnitt (21) den äußeren Abschnitt des Dämpfungsabschnittes (19) hält; wobei der Rohraufnahmeabschnitt(18), der Dämpfungsabschnitt (19) und der Halteabschnitt (21) einstückig miteinander verbunden sind und der Rohraufnahmeabschnitt (18) und der Halteabschnitt (21) lediglich durch den Dämpfungsabschnitt (19) miteinander verbunden sind.

2. Befestigungselement nach Anspruch 1, **dadurch gekennzeichnet, dass** der Halteabschnitt (21) Eingriffskanten (29) aufweist, die mit den oberen Kanten (27) auf beiden Seiten des Dämpfungsabschnittes (19) in Eingriff kommen.

3. Befestigungselement nach einem der Ansprüche 1 oder 2, **dadurch gekennzeichnet, dass** ein Paar Dämpfungsabschnitteingriffsabschnitte (33), die auf den oberen Enden von beiden Seiten des Rohraufnahmeabschnittes (18) sich auswärts erstrecken, um in den Dämpfungsabschnitt einzudringen.

4. Befestigungselement (14) nach einem der vorhergehenden Ansprüche, **dadurch gekennzeichnet, dass** der Rohraufnahmeabschnitt (18) und der Halteabschnitt (21) aus Hartharz gefertigt sind und der Dämpfungsabschnitt (19) aus Weichharz gefertigt ist.

5. Befestigungselement (14) nach einem der vorhergehenden Ansprüche, **dadurch gekennzeichnet, dass** der Plattenbefestigungsabschnitt (17) Mittel zur Aufnahme eines an der Platte(5) befestigten Stiftbolzen (22) zum Eingriff mit demselben aufweist.

6. Befestigungselement (54) nach einem der Ansprüche 1 bis 4, **dadurch gekennzeichnet, dass** der Plattenbefestigungsabschnitt (55) so ausgebildet ist, dass er mit Hilfe eines Bolzens (58) und einer Mutter (57) an der Platte (5) befestigt wird.

7. Befestigungselement (62) nach einem der Ansprüche 1 bis 4, **dadurch gekennzeichnet, dass** das Rohrbefestigungselement (62) einen Plattenbefestigungsabschnitt (63) und zwei Rohrhalterungen (65) aufweist, die an gegenüberliegenden Seiten des Plattenbefestigungsabschnittes (63) vorgesehen sind und die Halteabschnitte (66) von einer der Rohrhalterungen (65) einstückig mit dem Halteabschnitt (65) der anderen Rohrhalterung (65) verbunden sind, wobei der Verbindungsabschnitt (57) der Halteabschnitte (66) durch ein schwingungsdämpfendes Bauteil (69) mit dem Plattenbefestigungsabschnitt (63) verbunden ist.

8. Befestigungselement (62) nach Anspruch 7, **dadurch gekennzeichnet, dass** der Plattenbefestigungsabschnitt (63) einen Bolzenaufnahmeclip (63) umfasst, der einen hohlen Schaft (70) zur Aufnahme eines Bolzens (22) aufweist, der an der Platte(5) befestigt ist, wobei der Clip (63) Bolzeneingriffsklinken (71), die im Inneren des Schaftes (70) gebildet sind, einen Kopf (73), der an einem Ende des Schaftes (70) gebildet ist und Rohrhalterungseingriffsklinken(74) hat, die an dem anderen Ende des Schaftes (70) ausgebildet sind, und das schwingungsdämpfende Bauteil (69) ein rohrförmiges Bauteil umfasst, in das der Schaft (70) des Bolzenaufnahmeclips (63) eindringt und das zwischen dem Clip (63) und den Rohrhalterungen (65) angeordnet ist.

9. Befestigungselement (62) nach Anspruch 8, **dadurch gekennzeichnet, dass** der Kopf(73) mit einem Loch (85) ausgebildet ist, durch das sich der Bolzen (22) hindurch erstreckt und der sich vom Kopf (73) aus erstreckende Bolzen (22) in eine Mutter (86) geschraubt werden kann.

10. Befestigungselement nach Anspruch 7, **dadurch gekennzeichnet, dass** der Plattenbefestigungsabschnitt einen Abstandsclip (91) umfasst mit einem hohlen Schaft (90), der den Bolzen (89) aufnimmt, um in die an der Platte (5) befestigte Mutter (87) geschraubt zu werden, wobei der Clip (91) einen Kopf (93), der an einem Ende des Schaftes (90) ausgebildet ist und Rohrhalterungseingriffsklinken (94) aufweist, die am anderen Ende des Schaftes (90) ausgebildet sind, und das schwingungsdämpfende Bauteil (69) ein rohrförmiges Bauteil umfasst in das der Schaft (90) des Abstandsclips(91) eindringt und sich zwischen dem Clip (91) und den Rohrhalterungen (65) befindet.

11. Verfahren zur Herstellung eines Befestigungselementes (14) nach einem der Ansprüche 1 bis 10, **dadurch gekennzeichnet, dass** das Verfahren die Schritte des Formens aus einem Stück des Plattenbefestigungsabschnittes (17), des Halteabschnittes (21) der Rohrhalterung (15) und des Rohraufnahmeabschnittes (18) umfasst, indem der gleiche Hartharz benutzt wird, während dünne Abschnitte zwischen dem Rohraufnahmeabschnitt(18) und dem Halteabschnitt(21) geformt werden, um einen Raum zu bilden, in dem der Dämpfungsabschnitt (19) vorgesehen werden soll, und des Formens des Dämpfungsabschnittes (19) durch Einspritzen eines schwingungsdämpfenden Materials in den Raum zwischen dem Rohraufnahmeabschnitt (18) und dem Halteabschnitt (21) des einstückig geformten Bauteils.

12. Verfahren nach Anspruch 11, **dadurch gekennzeichnet, dass** während des Schrittes des Formens aus einem Stück der Rohraufnahmeabschnitt (18) parallel zur Richtung der Rohre (2) angeordnet ist und versetzt zum Halteabschnitt (21) und dem Plattenbefestigungsabschnitt (17) und indem der Dämpfungsabschnitt (19) geformt wird, wird ein Spritzgussverfahren durchgeführt, während die dünnen Abschnitte durchbrochen werden, indem eine Metallform bewegt wird und der Rohraufnahmeabschnitt (18) bewegt wird.

13. Verfahren zur Herstellung eines Befestigungselementes (14) nach einem der Ansprüche 1 bis 10, **dadurch gekennzeichnet, dass** das Verfahren die Schritte des Formens aus einem Stück des Plattenbefestigungsabschnittes (17) und des Halteabschnittes (21) der Rohrhalterung (15) umfasst, indem der gleiche Hartharz benutzt wird, wobei der Rohraufnahmeabschnitt (18) aus dem gleichen Hartharz wie der Halteabschnitt (21) des einstückig geformten Bauteils geformt ist, mit einem Abstand, der für den vorzusehenden Dämpfungsabschnitt (19) beibehalten wird, und des Formens des Dämpfungsabschnittes (19) durch Einspritzen eines schwingungsdämpfenden Materials in den Raum zwischen dem Rohraufnahmeabschnitt (18) und dem Halteabschnitt (21).

14. Verfahren zur Herstellung eines Befestigungselementes nach einem der Ansprüche 1 bis 10, **dadurch gekennzeichnet, dass** das Verfahren die Vorbereitung des Plattenbefestigungsabschnittes (17) und des Halteabschnittes (21) der Rohrhalterung(15) umfasst, die unter Einsatz des gleichen Hartharzes aus einem Stück geformt sind, wobei der Rohraufnahmeabschnitt (18) geformt wird, indem der harte Harz eingesetzt wird und der Dämpfungsabschnitt(19) aus einem schwingungsdämpfenden Material aus Weichharz gefertigt ist, Anordnen des Dämpfungsabschnittes (19) zwischen dem Rohraufnahmeabschnitt (18) und dem Halteabschnitt (21) und Verbindung des Rohraufnahmeabschnittes (18) und des Halteabschnittes (21) zu einem Stück mit Hilfe des Dämpfungsabschnittes (19).

## Revendications

1. Attache de tuyaux (14) destinée à être utilisée pour la fixation de tuyaux (2) sur un panneau (5), comprenant un support de tuyaux (15) pour supporter les tuyaux (2) et une partie de fixation au panneau (17) devant être fixée sur le panneau (5) ; dans lequel le support de tuyaux (15) comprend une partie d'introduction de tuyaux (18) qui reçoit les tuyaux (2) à l'intérieur de celle-ci pour être en prise avec les tuyaux (2), une partie d'amortissement (19) à base de matériau absorbant les vibrations, et une partie de support (21) reliée à la partie de fixation de panneau (17), **caractérisée en ce que** la partie d'amortissement (19) est disposée sur la partie extérieure de la partie d'introduction de tuyaux (18) et **en ce que** la partie de support (21) supporte la partie extérieure de la partie d'amortissement (19) ; la partie d'introduction de tuyaux (18), la partie d'amortissement (19) et la partie de support (21) étant reliées les une avec les autres pour former une seule pièce et la partie d'introduction de tuyaux (18) ainsi que la partie de support (21) étant reliées seulement par l'intermédiaire de la partie d'amortissement (19).

2. Attache selon la revendication 1, **caractérisée en ce que** la partie de support (21) possède des bords d'introduction (29) qui sont en prise avec les bords supérieurs (27) des deux côtés de la partie d'amortissement (19).

3. Attache selon l'une quelconque des revendications 1 ou 2, **caractérisée en ce qu'**une paire de parties d'introduction de partie d'amortissement (33) située aux extrémités supérieures des deux côtés de la partie d'introduction de tuyau (18) s'étend vers l'extérieur pour mordre dans la partie d'amortissement.

4. Attache (14) selon l'une quelconque des revendications précédentes, **caractérisée en ce que** la partie d'introduction de tuyaux (18) et la partie de support (21) sont réalisées en résine dure et **en ce que** la partie d'amortissement (19) est réalisée en résine molle.

5. Attache (14) selon l'une quelconque des revendications précédentes, **caractérisée en ce que** la partie de fixation de panneau (17) possède un moyen de réception d'un goujon fileté (22) fixé au panneau (5) pour venir en prise avec celui-ci.

6. Attache (54) selon l'une quelconque des revendications 1 à 4, **caractérisée en ce que** la partie de fixation de panneau (55) est formée de manière à être fixée sur le panneau (5) au moyen d'un boulon (58) et d'un écrou (57).

7. Attache (62) selon l'une quelconque des revendications 1 à 4, **caractérisée en ce que** l'attache de tuyau (62) comprend une partie de fixation au panneau (63) et deux supports de tuyaux (65) présents sur les côtés opposés de la partie de fixation au panneau (63) et **en ce que** les parties de support (66) de l'un des supports de tuyau (65) est relié d'un seul tenant avec la partie de support (65) de l'autre support de tuyau (65), la partie d'accouplement (57) des parties de support (66) étant reliée avec la partie de fixation au panneau (63) par l'intermédiaire d'un élément absorbant les vibrations (69).

8. Attache (62) selon la revendication 7, **caractérisée en ce que** la partie de fixation au panneau (63) comprend un collier d'introduction de boulon (63) ayant une queue de fixation creuse (70) pour recevoir un boulon, (22) fixé sur le panneau (5), le collier (63) possédant des cliquets d'introduction de boulon (71) formés à l'intérieur de la queue de fixation (70), une tête (73) formée à une extrémité de la queue de fixation (70) et des cliquets d'introduction de support de tuyau (74) formés sur l'autre extrémité de la queue de fixation (70), et **en ce que** l'élément absorbant les vibrations (69) comprend un élément tubulaire destiné à être pénétré par la queue de fixation (70) du collier d'introduction de boulon (63) et est situé entre le collier (63) et les supports de tuyau (65).

9. Attache (62) selon la revendication 8, **caractérisée en ce que** la tête (73) est formée avec un trou (85) à travers lequel s'étend le boulon (22), et **en ce que** le boulon (22) s'étendant à partir de la tête (73) peut être vissé dans un écrou (86).

10. Attache selon la revendication 7, **caractérisée en ce que** la partie de fixation de panneau comprend un collier d'écartement (91) possédant une queue de fixation creuse (90) qui reçoit le boulon (89) devant être vissé dans l'écrou (87) fixé sur le panneau (5), le collier (91) ayant une tête (93) formée à une extrémité de la queue de fixation (90) et des cliquets d'introduction de support de tuyau (94) formés à l'autre extrémité de la queue de fixation (90), et **en ce que** l'élément absorbant les vibrations (69) comprend un élément tubulaire destiné à être pénétré par la queue de fixation (90) du collier d'écartement (91) et est situé entre le collier (91) et les supports de tuyau (65).

11. Procédé de fabrication d'une attache (14) selon l'une quelconque des revendications 1 à 10, **caractérisé en ce que** le procédé comprend les étapes de moulage d'un seul tenant de la partie de fixation au panneau (17), de la partie de support (21) du support de tuyau (15) et de la partie d'introduction de tuyaux (18) pour former une pièce en utilisant la même résine dure tout en formant des parties minces entre la partie d'introduction de tuyaux (18) et la partie de support (21) de manière à réaliser un espace dans lequel la partie d'amortissement (19) doit être présente, et de moulage de la partie d'amortissement (19) pour former une seule pièce par injection d'un matériau absorbant les vibrations dans l'espace entre la partie d'introduction de tuyau (18) et la partie de support (21) de l'élément moulé.

12. Procédé selon la revendication 11, **caractérisé en ce que** durant l'étape de moulage en une seule pièce, la partie d'introduction de tuyaux (18) est positionnée parallèlement à la direction des tuyaux (2) tels qu'ils sont décalés par rapport à la partie de support (21) et à la partie de fixation de panneau (17) et **en ce que** durant le moulage de la partie d'amortissement (19), le moulage par injection est exécuté tout en cassant les parties minces par déplacement d'un moule métallique, et en déplaçant la partie d'introduction de tuyaux (18).

13. Procédé de fabrication d'une attache (14) selon l'une quelconque des revendications 1 à 10, **caractérisé en ce que** le procédé comprend les étapes de moulage de la partie de fixation au panneau (17) et de la partie de support (21) du support de tuyau (15) pour former une seule pièce en utilisant la même résine dure, la partie d'introduction de tuyaux (18) étant moulée avec la même résine dure que la partie de support (21) de l'élément moulé en une pièce, un espace étant conservé pour la partie d'amortissement (19) prévue, et de moulage de la partie d'amortissement (19) par injection d'un matériau absorbant les vibrations dans l'espace entre la partie d'introduction de tuyaux (18) et la partie de support (21).

14. Procédé de fabrication d'une attache selon l'une quelconque des revendications 1 à 10, **caractérisé en ce que** le procédé comprend la préparation de la partie de fixation de panneau (17) et de la partie de support (21) du support de tuyau (15) moulée en une seule pièce en utilisant la même résine dure, la partie d'introduction de tuyaux (18) étant moulée en utilisant la résine dure et la partie d'amortissement (19) étant réalisée avec un matériau absorbant les vibrations à base de résine molle, le positionnement de la partie d'amortissement (19) entre la partie d'introduction de tuyaux (18) et la partie de support (21), et la liaison de la partie d'introduction de tuyaux (18) avec la partie de support (21) pour former ensemble une seule pièce au moyen de la partie d'amortissement (19).
